(19) **Europäisches Patentamt**
**European Patent Office**
**Office européen des brevets**

(11) **EP 1 634 276 B1**

(12) **EUROPEAN PATENT SPECIFICATION**

(45) Date of publication and mention
of the grant of the patent:
**07.11.2007 Bulletin 2007/45**

(51) Int Cl.:
***G10L 19/00*** *(2006.01)*

(21) Application number: **04734588.9**

(22) Date of filing: **24.05.2004**

(86) International application number:
**PCT/IB2004/050759**

(87) International publication number:
**WO 2004/107317 (09.12.2004 Gazette 2004/50)**

(54) **APPARATUS AND METHOD FOR EMBEDDING A WATERMARK USING SUB-BAND FILTERING**

VORRICHTUNG UND VERFAHREN ZUM EINBETTEN EINES WASSERZEICHENS UNTER VERWENDUNG VON SUBBANDFILTERUNG

APPAREIL ET PROCEDE D'IMPLANTATION D'UN FILIGRANE FAISANT APPEL AU FILTRAGE DE SOUS-BANDES

(84) Designated Contracting States:
**AT BE BG CH CY CZ DE DK EE ES FI FR GB GR HU IE IT LI LU MC NL PL PT RO SE SI SK TR**

(30) Priority: **28.05.2003 EP 03101546**
**25.06.2003 EP 03101883**

(43) Date of publication of application:
**15.03.2006 Bulletin 2006/11**

(73) Proprietor: **Koninklijke Philips Electronics N.V.**
**5621 BA Eindhoven (NL)**

(72) Inventors:
• **VAN DER VEEN, Minne**
**NL-5656 AA Eindhoven (NL)**
• **LEMMA, Aweke, N.**
**NL-5656 AA Eindhoven (NL)**
• **BRUEKERS, Alphons, A., M., L.**
**NL-5656 AA Eindhoven (NL)**

(74) Representative: **Schmitz, Herman Jan Renier**
**Philips**
**Intellectual Property & Standards**
**P.O. Box 220**
**5600 AE Eindhoven (NL)**

(56) References cited:
**WO-A-02/091374**

• **ANSARI R ET AL: "Data-hiding in audio using frequency-selective phase alteration" IEEE ICASSP 2004, 17 May 2004 (2004-05-17), pages V/389-V/392, XP009035690 PISCATAWAY, NJ, USA ISBN: 0-7803-8484-9**
• **QIAO L ET AL: "NON-INVERTIBLE WATERMARKING METHODS FOR MPEG ENCODED AUDIO" PROCEEDINGS OF THE SPIE, SPIE, BELLINGHAM, VA, US, vol. 3657, January 1999 (1999-01), pages 194-202, XP000949874 ISSN: 0277-786X**
• **PROAKIS J G ET AL: "Digital Signal Processing: principles, algorithms, and applications" 1996, DIGITAL SIGNAL PROCESSING, PRINCIPLES, ALGORITHMS AND APPLICATIONS , XP002294047 page 330, line 8 - line 41**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Field of the invention

The invention relates to an apparatus and a method for embedding a watermark and in particular to an apparatus and a method for embedding a watermark into a sub-band encoded media signal.

Background of the Invention

The illicit distribution of copyright material deprives the holder of the copyright the legitimate royalties for this material, and could provide the supplier of this illicitly distributed material with gains that encourages continued illicit distributions. In light of the ease of transfer provided by the Internet, content material that is intended to be copyright protected, such as artistic renderings or other material having limited distribution rights are susceptible to wide-scale illicit distribution. The MP3 format for storing and transmitting compressed audio files has made a wide-scale distribution of audio recordings feasible. For instance, a 30 or 40 megabyte digital PCM (Pulse Code Modulation) audio recording of a song can be compressed into a 3 or 4 megabyte MP3 file. Using a typical 56 kbps dial-up connection to the Internet, this MP3 file can be downloaded to a user's computer in a few minutes. This means that a malicious party could provide a direct dial-in service for downloading MP3 encoded song. The illicit copy of the MP3 encoded song can be subsequently rendered by software or hardware devices or can be decompressed and stored on a recordable CD for playback on a conventional CD player.

A number of techniques have been proposed for limiting the reproduction of copy-protected content material. The Secure Digital Music Initiative (SDMI) and others advocate the use of "digital watermarks" to identify authorised content material.

Digital watermarks can be used for copy protection according to the scenarios mentioned above. However, the use of digital watermarks is not limited to this but can also be used for so-called forensic tracking, where watermarks are embedded in e.g. files distributed via an Electronic Content Delivery System, and used to track for instance illegally copied content on the Internet. Watermarks can furthermore be used for monitoring broadcast stations (e.g. commercials); or for authentication purposes etc.

There are several known techniques for embedding watermarks in a raw uncompressed signal.

For example, several techniques exist to embed a watermark in a raw uncompressed audio signal. International Patent Application WO-A-02/091374 describes a method of watermarking a raw uncompressed audio signal by use of a watermark filter. In this method, the watermark signal is embedded by means of linear filtering of the raw uncompressed signal x[n] by a filter w'[n]:

$$y[n] = x[n] + \alpha \cdot (x[n] * w'[n]) \qquad (1)$$

where $\alpha$ is a scaling factor corresponding to the embedding strength, y[n] is the watermarked output signal and * denotes the convolution operation. w'[n] represents the impulse response of the watermark filter. Re-ordering the equation yields:

$$y[n] = x[n] * (1 + \alpha \cdot w'[n]) = x[n] * w[n] \qquad (2)$$

where w[n] = 1+$\alpha \cdot$w'[n]. This representation shows that the approach of WO 02/091374 is equivalent to filtering the input signal x[n] by the watermark filter w[n].

However, currently a major part of e.g. audio content is available in a compressed format such as MPEG, AAC, WMA, etc. The compressed audio signal is sometimes referred to as the bitstream. Embedding in this domain is therefore often called bitstream watermarking.

In order to utilise the filter based watermark approach of WO 02/091374, a compressed signal is first converted back into a raw uncompressed signal. A watermark may then be embedded by an operation in accordance with equation (1) or (2) given above and the resulting signal may be converted back into a compressed signal. However, a number of disadvantages are associated with such an approach including:

- The process requires an additional decoding and encoding process. These processes are complex and therefore increase the complexity and computational burden substantially. This may for example result in increased cost and/or power consumption.

- There is an increased operational delay as not only the filtering delay but also the additional delay of the decoding and encoding processes are incurred. This may a significant disadvantage in for example real time applications.
- Although the decoding and encoding processes aim at achieving high quality, these processes are inherently not loss free processes and typically result in loss of information. Thus, the quality of the resulting audio signal may be reduced and the process may in practice introduce additional unwanted distortions which are undesired or unacceptable.

Hence, an improved system for embedding watermarks in media signals would be advantageous and in particular a system allowing for reduced complexity, improved quality, and/or reduced delay would be advantageous.

Summary of the Invention

Accordingly, the Invention preferably seeks to mitigate, alleviate or eliminate one or more of the above mentioned disadvantages singly or in any combination.

According to a first aspect of the invention, there is provided a method of embedding a watermark into an input signal of an audio signal comprising the steps of:

obtaining a plurality of sub-band signals of the input signal;
filtering a set of sub-band signals with a sub-band filter having a response associated with the watermark to generate a set of filtered sub-band signals; and generating an output signal by combining the set of filtered sub-band signals.

Many media encoded signals are encoded using sub-band encoding. The invention allows for watermark embedding in the sub-band domain thereby obviating the requirement for decoding and re-encoding the bitstream of the encoded signal. The invention thus allows for an advantageous method of watermark embedding and may specifically result in reduced delay, complexity and/or delay of the watermarking process. Furthermore, watermark embedding by filtering provides for a watermarking process which is highly suitable for practical implementation and which does not necessitate complex digital signal processing techniques.

According to a feature of the invention, the input signal is a sub-band encoded audio signal.

In particular, the sub-band encoded audio signal may be an audio signal comprising multiplexed sub-band values. Specifically, the sub-band encoded audio signal may be a compressed bitstream. For example, the audio signal may be encoded in accordance with a sub-band encoding process such as an MPEG1 layer 1, 2 or 3 encoding process.

This allows for a particularly low complexity embodiment wherein the sub-bands may be obtained directly from the input signal by simple operations. For example, the plurality of sub-bands may specifically correspond to the sub-bands of the sub-band encoded signal. The sub-bands may thus be obtained directly from sub-band encoded signal for example by demultiplexing of the input signal. In other words, the filtering in the sub-band domain may be by directly filtering the sub-bands of the input signal.

According to a feature of the invention, the output signal is a sub-band encoded audio signal.

In particular, output signal may be a sub-band encoded audio signal comprising multiplexed sub-band values. Specifically, the sub-band encoded audio signal may be a compressed bitstream. For example, the audio signal may be an MPEG1 layer 1, 2 or 3 encoded audio signal. Preferably, the output signal and input signal have corresponding sub-bands allowing for a simple and/or fast watermark embedding without requiring any sub-band conversion. This is particularly suitable where the input and output signals are of the same type. For example, the output signal may be an MPEG1 encoded signal substantially identical to the input MPEG1 encoded input signal but with the watermark embedded. Thus a very simple and high performance method may be provided for substantially transparently embedding a watermark in an existing signal.

According to a feature of the invention, the input signal has a corresponding base band input signal, the output signal has a corresponding base band output signal having an associated desired watermark, and the response of the sub band filter is such that the watermark of the output signal corresponds to the desired watermark of the base band output signal.

For example, the input signal may be a compressed bitstream having a corresponding PCM non-compressed base band signal. Likewise, the output signal may be a compressed bitstream having a corresponding PCM non-compressed base band signal. The response may for example be the frequency response of the sub-band filter or a set of impulse responses of the sub-band filter for each sub-band channel.

The watermark embedded by the sub-band filter may be substantially equivalent to the watermark that is desired for the corresponding base band signal. Hence, the invention allows for a desired base band watermark to be embedded by a simple process performed in the sub-band domain.

According to a feature of the invention, the response of the sub-band filter corresponds to a sub-band equivalent of a response of a base band filter which by filtering of the base band input signal results in the desired watermark.

The sub-band filter may thus embed a watermark in the sub-band domain which is substantially equivalent to a desired watermark that may be embedded by a corresponding base band filter. Specifically, the sub-band filter may result in a substantially similar watermark being embedded as if the input signal had been decoded, filtered by the base band filter and then re-encoded. Thus, a desired base band watermark may be embedded in a compressed bit stream without requiring conversion to or from base band.

According to a feature of the invention, the method further comprises the step of multiplying at least one of the filtered sub-band signals by a watermark energy scaling factor. This provides for a particularly suitable implementation of the sub-band filtering wherein the strength of the watermarking may be controlled directly and explicitly by the watermark energy scaling factor.

According to a feature of the invention, the method further comprises the step of dynamically adapting the watermark energy scaling factor. This allows for the watermark embedding strength to be dynamically optimised for the current conditions. Thus, the watermark embedding strength may for example be dynamically controlled to be as large as possible (thereby facilitating detection) while not resulting in an unacceptable degradation of the media signal.

According to a feature of the invention, the step of dynamically adapting the watermark energy scaling factor comprises dynamically adapting the watermark energy scaling factor in response to a characteristic of the input signal.

The characteristic may e.g. be derived from the input signal and/or from a sub-band obtained from the input signal. The sensitivity of the media signal to the watermark embedding strength depends on dynamic characteristics of the input signal and the strength of the watermark embedding may therefore be adjusted in response to these characteristics. For example, the watermark energy scaling factor may be adjusted in response to a masking threshold applied to the original media signal during encoding.

According to a feature of the invention, the method further comprises the step of summing an unfiltered sub-band signal and a corresponding filtered sub-band signal. This allows for a convenient implementation wherein the embedding strength may be controlled.

According to a feature of the invention, the method further comprises the step of adding a data payload to the watermark by shifting the set of sub-bands signals relative to the sub-band filter.

This allows for additional data to be communicated between a transmitting end and a receiving end and specifically between an apparatus embedding the watermark and an apparatus for detecting the watermark. The sub-band shifting allows for the additional data to be introduced in a simple low complexity way which does not affect the quality of the media signal and or the watermark detection performance.

According to a feature of the invention, the method further comprises the step of performing an inverse shifting of the set of filtered sub-bands signals relative to the sub-band filter. This allows for a data payload to be introduced without affecting the media content of the output signal. Thus, the decoding of the output signal is unaffected by the watermark or the data payload.

According to a feature of the invention, each shift position corresponds to a data value. This provides for a particularly advantageous and low complexity way of adding a data payload to the watermark embedding.

According to a feature of the invention, the step of obtaining comprises de-multiplexing, inverse quantising and scaling the input signal. This provides for a particularly suitable and low complexity implementation for sub-band encoded media signals.

According to a feature of the invention, the step of generating comprises quantising and multiplexing the output signal. This provides for a particularly suitable and low complexity implementation for generating sub-band encoded media signals.

According to a feature of the invention, the set of sub-band signals comprises all sub-band signals of the plurality of sub-band signals. The set of sub-band signals may comprise only some of the plurality of sub-band signals in order to reduce complexity and the computational burden but preferably comprises all of the sub-band signals in order to optimise the watermark performance.

According to a feature of the invention, the method further comprises the steps of: decoding the output signal to generate a base band signal; and detecting the watermark in response to a characteristic of the base band signal. This allows for a low complexity and high performance method of embedding and detecting a watermark where the watermark may be embedded in the sub-band domain and detected in the base band domain.

According to a second aspect of the invention, there is provided an apparatus for embedding a watermark into an input signal of an audio signal comprising: means for obtaining a plurality of sub-band signals of the input signal; a sub-band filter for filtering a set of sub-band signals to generate a set of filtered sub-band signals, the sub-band filter having a response associated with the watermark; and means for generating an output signal by combining the set of filtered sub-band signals.

These and other aspects, features and advantages of the invention will be apparent from and elucidated with reference to the embodiment(s) described hereinafter.

Brief Description of the Drawings

An embodiment of the invention will be described, by way of example only, with reference to the drawings, in which

FIG. I is an illustration of a system for encoding and decoding an audio signal;
FIG. 2 illustrates a system for embedding a watermark by filtering of a base band signal;
FIG. 3 illustrates a system for embedding a watermark in a sub-band encoding signal by filtering of a corresponding base band signal;
FIG. 4 illustrates a flow chart of a method of embedding a watermark in accordance with an embodiment of the invention;
FIG. 5 illustrates a block diagram of an apparatus for embedding a watermark in accordance with an embodiment of the invention;
FIG. 6 illustrates a block diagram of an alternative apparatus for embedding a watermark in accordance with an embodiment of the invention;
FIG. 7 illustrates a block diagram of a base band watermark embedding apparatus;
FIG. 8 illustrates a block diagram of a sub-band watermark embedding apparatus in accordance with an embodiment of the invention;
FIG. 9 illustrates a polyphase representation of the filters of the apparatus of FIG. 7;
FIG. 10 illustrates the filters of FIG. 9 wherein the polyphase filtering operations have been transferred to the sub-band domain;

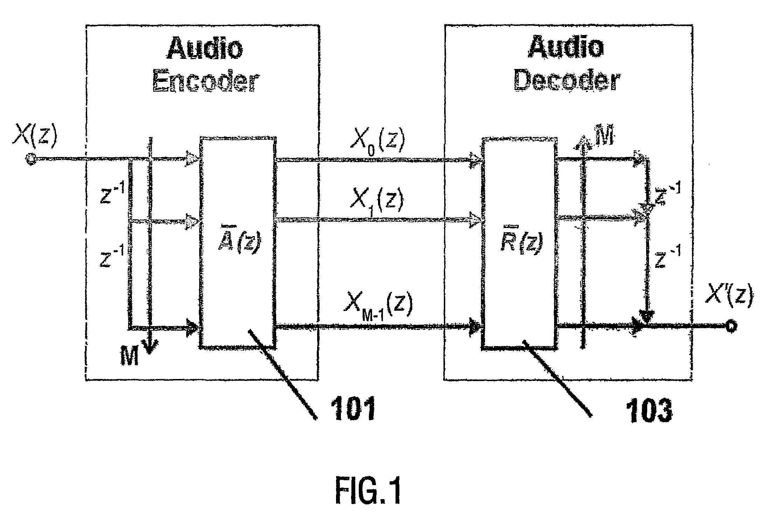

FIG. 1 I illustrates a sub-band filter $W_0(z)$ for embedding a watermark carrying a first bit value in accordance with an embodiment of the invention;

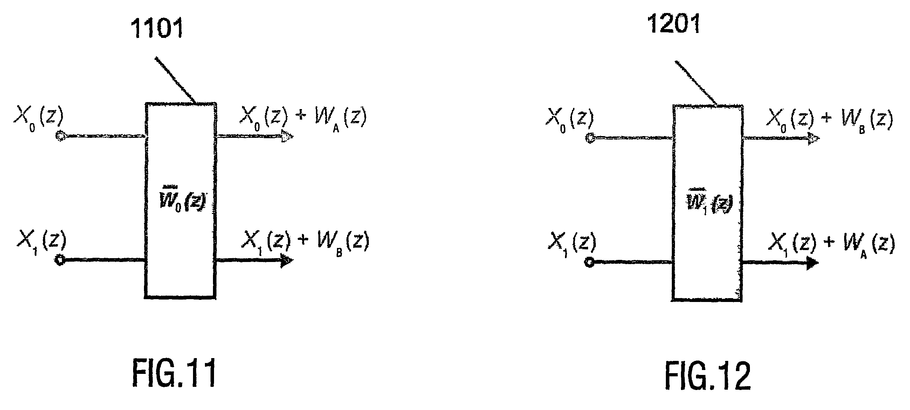

FIG. 12 illustrates a sub-band filter $W_1(z)$ for embedding a watermark carrying a second bit value in accordance with an embodiment of the invention; and

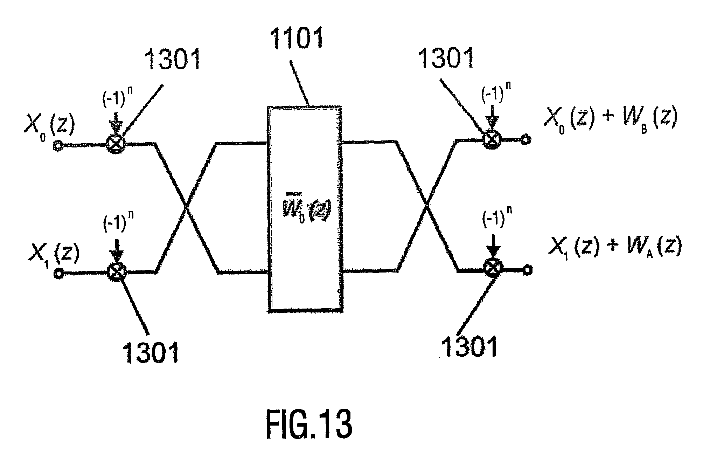

FIG. 13 illustrates a sub-band filter $W_0(z)$ for embedding a watermark carrying a second bit value in accordance with an embodiment of the invention.

Description of Preferred Embodiments

The following description focuses on an embodiment of the invention applicable to an audio signal and in particular to an MPEG 1 encoded audio signal. However, it will be appreciated that the invention is not limited to this application but may be applied to many other encoding methods and audio signals.

FIG. 1 is an illustration of a system for encoding and decoding an audio signal. Specifically, FIG. 1 illustrates the fundamental elements of typical sub-band audio encoders and decoders. The main elements are an analysis filterbank 101 and a synthesis or reconstruction filterbank 103. In the following, the polyphase description of both filterbanks will be used and the transfer matrices consisting of the polyphase components of the filters in the filterbank will be represented by A(z) for the analysis filterbank and R(z) for the synthesis filterbank. The filterbanks may for example correspond to cosine-modulated filterbanks as used in MPEG1. The parameter M will be used to denote the number of bands of the filterbank and thus the number of sub-bands of the sub-band encoded signal. In a critically sampled filterbank (i.e. sampled at the minimum Nyquist sample rate), M further corresponds to the decimation and interpolation factors of the analysis and synthesis filterbanks.

In the following, the base band input signal will be represented by X(z) and X(z) will be used to denote a vector of sub-band signals. The individual signals of the sub-bands will be denoted by a subscript, i.e. $X(z) = \{X_0(z), X_1(z), ..., X_{M-1}(z)\}$. In the preferred embodiment, the base band signal X(z) is sampled at the sample frequency $f_s$ whereas each sub-band signal has a sample frequency of $f_s/M$.

As can be seen from FIG. 1, the audio encoding generates the sub-band signal X(z) as:

$$X(z) = A(z) \cdot X(z) \qquad\qquad (3)$$

The audio decoding generates the decoded base band signal X'(z) as:

$$X'(z) = R(z) \cdot X(z) \qquad\qquad (4)$$

In the ideal case, the synthesis filter exactly reverses the process of the analysis filter such that X(z)= X'(z). However, in practical systems the decoded signal is generally not identical to the encoded signal.

In most practical embodiments, including MPEG1, the encoded audio signal is not only encoded in the sub-band domain but is also compressed in this domain. The data compression is achieved by individually quantizing and scaling the data values of each sub-band in accordance with a psycho-acoustic model. Specifically, a psycho-acoustic masking threshold is used to reduce the bit rates of the individual sub-bands. The quantized values and associated scaling factors for each sub-band are multiplexed into a single compressed signal which in the following will be referred to as a compressed bitstream.

It is often desirable to insert a watermark into a media signal such as an audio signal. WO 02/091374 A1 discloses a method of inserting a watermark into a base band signal by a filtering of the base band signal.

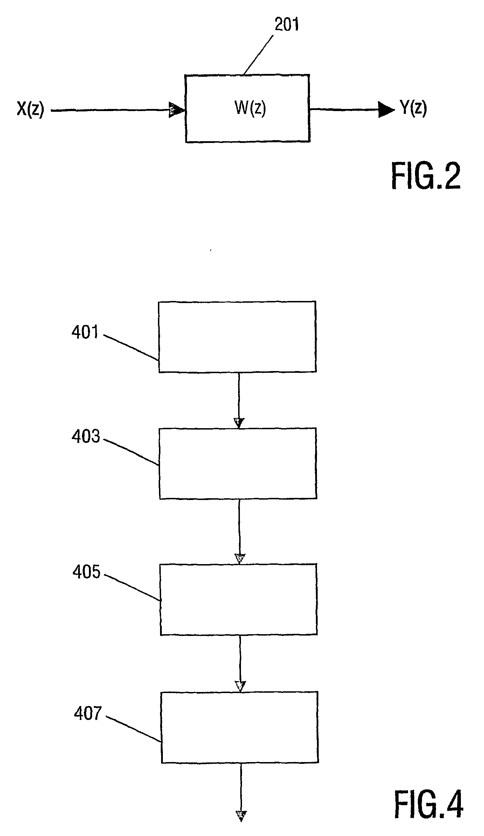

FIG. 2 illustrates a system for embedding a watermark by filtering of a base band signal. The base band signal X(z) is filtered by the watermark filter W(z) 201 to generate the watermark embedded output base band signal Y(z):

$$Y(z)=W(z){\cdot}X(z) \qquad\qquad (5)$$

Corresponding to the time-discrete equation (2) previously described:

$$y[n] = x[n] * (1 + \alpha{\cdot}w'[n]) = x[n] * w[n] \quad (2)$$

However, as the watermark filter W(z) requires a base band signal, it cannot be applied to the compressed sub-band bitstream X(z).

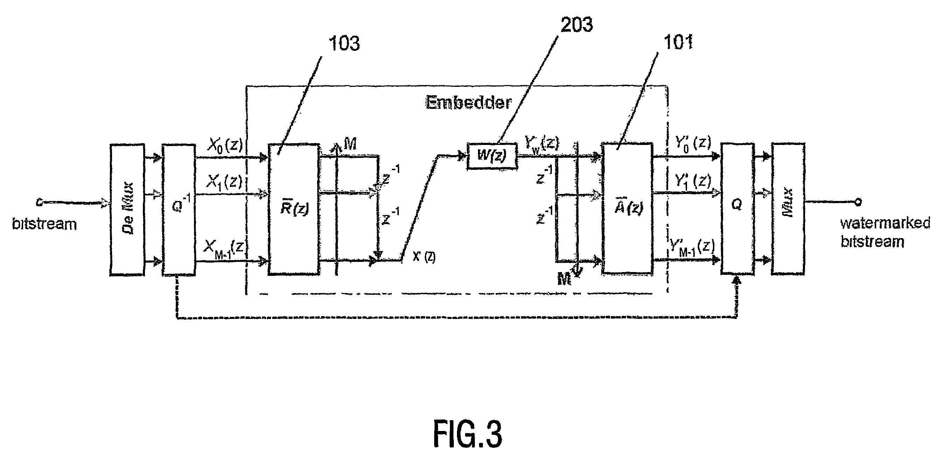

FIG. 3 illustrates a system for embedding a watermark in a sub-band encoding signal by filtering of a corresponding base band signal.

The incoming sub-band encoded bitstream X(z) is de-multiplexed and de-quantized and the resulting sub-band signals are fed to a synthesis filter R(z) 103. The resultant samples are combined to generate the corresponding base band signal X'(z). Thus a base band signal X'(z) is generated by a decoding of the incoming compressed bitstream. The generated base band signal X'(z) is subsequently filtered in the base band watermark filter W(z) 203 to generate a watermark embedded base band signal Y(z). This base band signal is fed to an analysis filter 101 and the resulting sub-band data values are quantized and multiplexed into a bitstream. Thus the watermark embedded base band signal Y(z) is re-encoded as a sub-band encoded output signal.

The approach illustrated in FIG. 3 thus comprises the following steps:

synthesizing (decoding) the signal X(z) with a re-construction filterbank R(z) 103,
embedding a watermark in the signal X'(z) using the filter W(z) 203, and deriving the watermarked sub-band signals Y(z) using the analysis filterbank A(z) 101. Subsequent scaling, quantizing and multiplexing results in the watermarked bitstream.

However, this approach is associated with a number of disadvantages including:

Additional filterbanks R(z) and A (z) are required thus increasing complexity, computational load and power consumption.
Operational delay of the embedding procedure is increased by the additional filterbank operations. This may especially be a notable disadvantage for real-time applications.
Cascading of the filterbanks resulting from the decoding and re-encoding process may introduce additional unwanted distortions.
It would be desirable to implement a watermarking without requiring decoding of the compressed bitstream.

In the preferred embodiment of the current invention, a temporal watermark may be embedded in the sub-band domain by use of a sub-band filtering process,

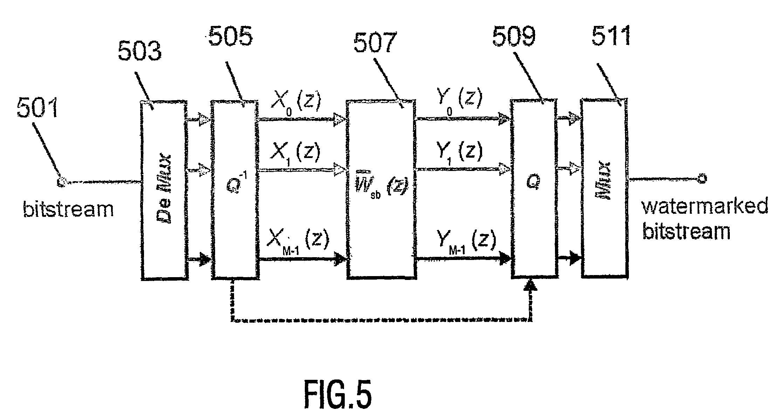

FIG. 4 illustrates a flow chart of a method of embedding a watermark in accordance with a preferred embodiment of the invention.

In step 401, an input signal, such as an audio or other media signal, is received.

Step 401 is followed by step 403 wherein a plurality of sub-band signals is obtained from the input signal. In the preferred embodiment, the input signal is a sub-band encoded media signal and the sub-bands may directly be obtained from the samples of the individual sub-bands. In other embodiments, the plurality of sub-bands may be obtained in other ways. For example, the input signal may in some cases be a base band signal and the plurality of sub-bands may be obtained by a sub-band encoding process. Thus, the watermark embedding may in some embodiments be integrated with the sub-band encoding.

Step 403 is followed by step 405 wherein a set of the obtained sub-band signals are filtered by a sub-band filter having a response associated with the watermark. The sub-band watermark filter thus generates a set of filtered sub-band signals. In the preferred embodiment, the set of sub-band signals comprises all the sub-band signals but in some embodiments a subset of sub-bands may be used. This may specifically be desired in order to reduce complexity of the sub-band filter and thus of the watermark embedder.

Step 405 is followed by step 407 wherein an output signal is generated by combining the set of filtered sub-band signals. In the preferred embodiment, the output signal is a sub-band encoded media signal and specifically the sub-band samples of the filtered sub-band signals may be unchanged and simply combined into a multiplexed bitstream (possibly following quantisation). In other embodiments, more advanced processing may be applied to generate the output signal from the sub-band values.

FIG. 5 illustrates a block diagram of an apparatus for embedding a watermark in accordance with a preferred embodiment of the invention.

The apparatus comprises an input 501 which in the specific embodiment receives a compressed audio bitstream. The bitstream is fed to a de-multiplexer 503 which de-multiplexes the bitstream to provide the individual sub-band quantized samples. The sub-band samples are fed to a de-quantizer 505 which de-quantizes the sub-band samples to provide the sub-band data values generated by the analysis filter of the,audio encoder. These sub-band signals $X_0(z)$ - $X_{M-1}(z)$ are fed to the sub-band filter $W(z)$ 507 which embeds a watermark by performing a sub-band filtering of the sub-band signals $X_0(z)$ - $X_{M-1}(z)$ thereby generating filtered sub-band signals $Y_0(z)$ - $Y_{M-1}(z)$ comprising a sub-band watermark.

The sub-band filter $W(z)$ 507 is coupled to a quantizer 509 which quantizes the filtered sub-band signals $Y_0(z)$ - $Y_{M-1}(z)$. The quantization operation of the quantizer 509 may be equivalent to the quantization specified for the audio encoding. For example, a psycho acoustic-masking threshold of the MPEG1 specifications may be used. The quantizer 509 is coupled to a multiplexer 511 which multiplexes the data values of the filtered sub-band signals $Y_0(z)$ - $Y_{M-1}(Z)$ into a single bitstream. Thus, the watermark embedder may specifically implement the function:

$$Y(z) = X(z) \cdot W(z) \qquad (6)$$

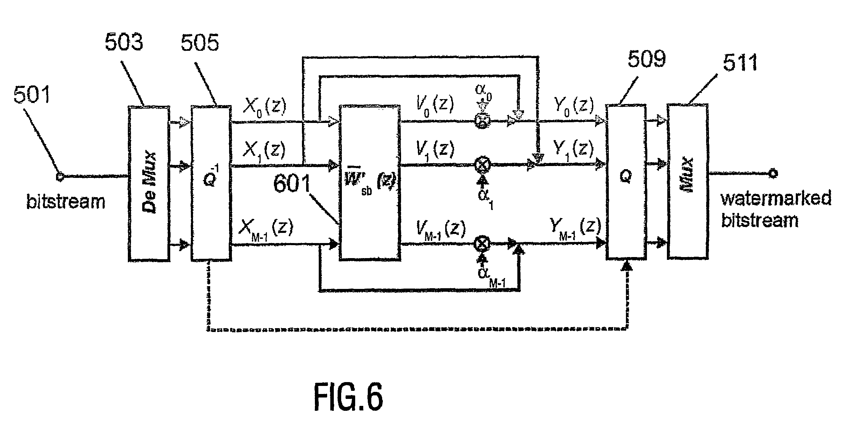

FIG. 6 illustrates a block diagram of an alternative apparatus for embedding a watermark in accordance with an embodiment of the invention. The apparatus of FIG. 6 corresponds to the apparatus of FIG. 5 but has a specific implementation of the sub-band filter $W(z)$.

In the embodiment of FIG. 6, a modified sub-band filter $W'(z)$ 601 is coupled to the quantizer 505. The modified sub-band filter $W'(z)$ 601 generates modified filtered sub-band signals $V_0(z)$ - $V_{M-1}(Z)$. The watermark embedding of the apparatus of FIG. 6 further comprises multiplying at least one and preferably all of the filtered sub-band signals by a watermark energy scaling factor ($\alpha$). Specifically, the watermark energy scaling factor may be a vector $\alpha = \alpha_0 - \alpha_{M-1}$, i.e. the scaling factor may be different for different sub-band signals.

Furthermore, the approach comprises summing the individual unfiltered sub-band signal with a corresponding filtered sub-band signal. Thus, the sub-band signals input to the quantiser 509 are in this embodiment:

$$Y(z) = X(z) + \alpha \cdot V(z) = X(z) + \alpha \cdot X(z) \cdot W'(z) = X(z) \cdot (1 + \alpha \cdot W'(z)) \qquad (7)$$

Although the implementations in FIG. 5 and 6 are not identical, the filters $W'(z)$ and $W(z)$ may be designed such that the response of both systems is identical by setting $1 + \alpha \cdot W'(z) = W(z)$.

An advantage of the embodiment of FIG. 6 is the visibility of the embedding strength $\alpha$, which controls the relative watermark energy. Specifically, $\alpha_m$ may control the watermark energy in the individual sub-band signals. In the simplest implementation, $\alpha$ is constant in time and for each sub-band. In a more advanced implementation, $\alpha_m$ can be made adaptive. The embedding strength may thus be adjusted dynamically to suit the current conditions and in particular the current characteristics of the input signal. The adaptation of $\alpha_m$ may for example be in response to the masking threshold of the host signal.

In the preferred embodiment, the input signal $X(z)$ is a compressed bitstream obtained by a sub-band audio encoding of a base band signal $X(z)$. Thus, the input signal has a corresponding base band signal. Likewise, the output signal is a compressed bit stream Y(z) which may be decoded to generate a base band signal Y(z). Thus, the output signal has a corresponding base band output signal Y(z).

Watermark detection may frequently be performed in the base band domain. For example, in the system of FIG. 2, a base band watermark may be embedded in the base band and may be detected in the base band domain by a base band watermark detector. It may be advantageous to implement a sub-band watermark embedding which corresponds to the base band watermark embedding of FIG. 2. This will allow for the same watermark detector to be used irregardless of which watermark embedding method has been used and without the watermark detector having any information of how the watermark was embedded. Thus, the corresponding output base band signal Y(z) may have an associated desired watermark.

In the preferred embodiment, the sub-band filter W(z) is designed such that it results in a watermark of the output signal which corresponds to the desired watermark of the base band output signal. Specifically, W(z) preferably has a response such that the base band watermark that results from a decoding of the output signal Y(z) is sufficiently similar to the desired base band watermark and specifically to the watermark signal that would result from the base band filtering operation of FIG. 2.

A method of designing a sub-band filter W(z) given the equivalent base band filter W(z) to achieve this goal will be described in the following.

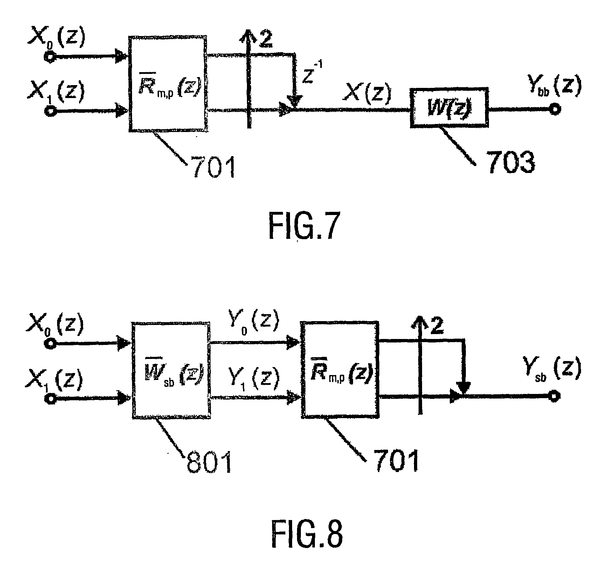

FIG. 7 illustrates a block diagram of a base band watermark embedding apparatus. FIG. 8 illustrates a block diagram of a sub-band watermark embedding apparatus in accordance with an embodiment of the invention. For clarity and brevity, FIG. 7 and 8 illustrates watermark embedding for a simple two sub-band encoded signal. However, the principle is readily extended to signals having more sub-bands.

In the apparatus of FIG. 7, a sub-band signal X(z) fed to an analysis filter R(z) which generates the corresponding base band signal X(z). X(z) is subsequently filtered in the base band watermark filter W(z) to generate the base band watermarked output signal $Y_{bb}(z)$. In FIG. 8, the signal X(z) is fed to a sub-band filter W(z) 801 generating a watermarked sub-band signal Y(z). This signal is fed to the analysis filter R(z) 701 which generates the base band watermarked output signal $Y_{sb}(z)$.

The goal of the design process is thus to design the sub-band filter W(Z) such that the response of both systems is substantially identical, or at least sufficiently similar. In other words, for a given input sub-band signal X(z), the task is to find W(z) such that $Y_{bb}(z)$ is substantially equal to $Y_{sb}(z)$.

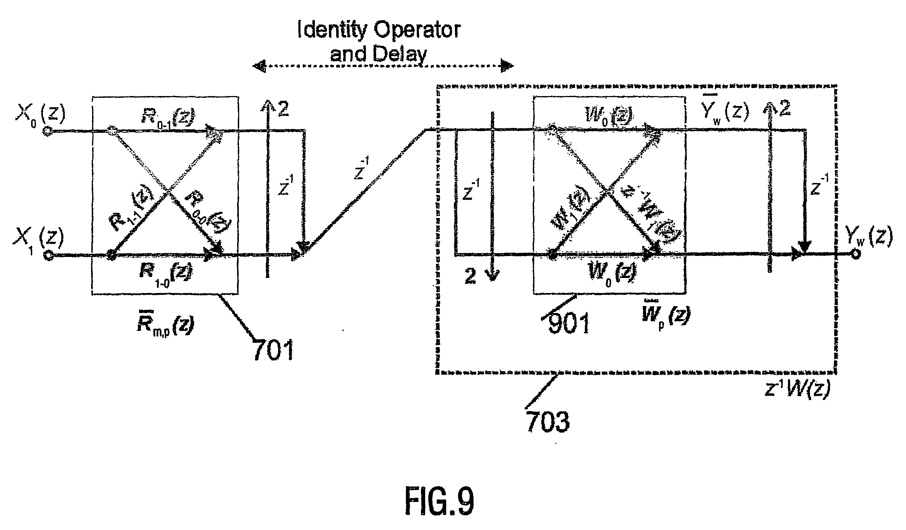

FIG. 9 illustrates a polyphase representation of the filters of the apparatus of FIG. 7. It is known in the art, that an arbitrary FIR-type filter may be rewritten as a polyphase filter and in FIG. 9 the individual components of the polyphase transfer matrices of R(z) and W(z) are shown.

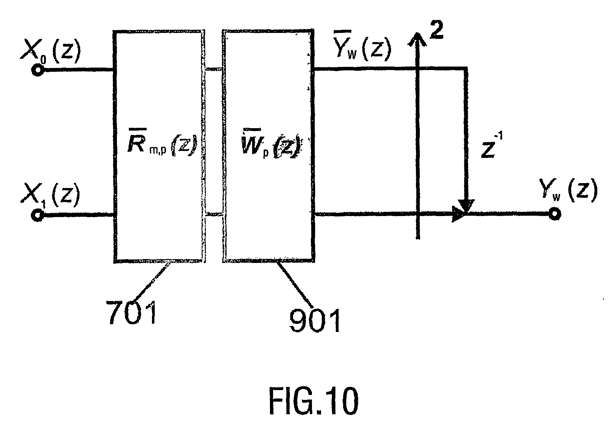

As illustrated in FIG. 9, the upsampling in the synthesis filter R(z) is followed by a down-sampling in W(z). Except for a delay $z^{-1}$, the process of up- sampling and down-sampling between the filters R(z) and W(z) is equivalent to the identity operator. The polyphase filtering operations $W_p(z)$ 901 may accordingly be transferred to the sub-band domain as illustrated in FIG. 10.

Although, the filtering of the system in FIG. 10 is in the sub-band domain, $W_p(z)$ 901 is based on filtering of sub-band signals which are not available in the input bitstream. However, comparing FIG. 10 and the desired topology of FIG. 8 shows that the systems are identical if:

$$W_p(z) \cdot R(z) \cdot X(z) = R(z) \cdot W(z) \cdot X(z) \qquad (8)$$

Thus, the transfer matrix of W(z) can be determined from the polyphase representation of the base band filter W(z):

$$W_p(z) \cdot R(z) = R(z) \cdot W(z) \qquad (9)$$

Multiplying both sides by $R^{-1}(z)$ yields:

$$W(z) = R^{-1}(z) \cdot W_p(z) \cdot R(z) \qquad (10)$$

Although this equation provides an exact expression for the sub-band filter W(z), it depends on the inverse $R^{-1}(z)$ of the polyphase transfer matrix R(z). In practical systems, the inverse matrix $R^{-1}(z)$ may have problems with causality and stability. A convenient way of deriving an equivalent (approximate) expression is the following. Assume the filterbank structures A(z) and R(z) of FIG. 1 are perfectly matched. In this case, except for a delay, the cascading of the analysis filter A(z) and reconstruction filter R(z) is equivalent to the identity operator, i.e.:

$$A(z)\cdot R(z)=z^{-k}I \qquad (11)$$

where I represents the identity matrix and *k is* the delay of the total system.

This may be rewritten as:

$$R^{-1}(z)=z^{k}A(z) \qquad (12)$$

Ignoring the delay component, equation (10) may thus be rewritten as:

$$W(z)=A(z)\cdot W_p(z)\cdot R(z) \qquad (13)$$

The transfer matrices of the analysis filter A(z) and the reconstruction filter R(z) are known and $W_p(z)$ may be derived from the base band filter W(z). Thus, the corresponding sub-band filter W(z) may be determined.

The described embodiment(s) provide a number of advantages including the following:

- The complexity of the watermark embedder is reduced. Compared to the approach of FIG. 3, the reconstruction filterbank R(z) and analysis filterbank A(z) are not required for watermark embedding. This will reduce computational complexity.
- The operational delay of the watermark embedder is smaller than the delay of the system of FIG. 3. This may be an important advantage in for example audio streams coupled with a video signal. Adding unnecessary delays in the audio stream requires additional delay (and thus expensive memory) of the video stream. Moreover it may be an advantage in real-time embedding applications.
- Additional distortion is reduced. The filterbanks R(z) and A(z) may not be perfectly reconstructing. Using additional cascaded filterbanks such as proposed in FIG. 3 may distort the audio signal more then necessary.

In the preferred embodiment, the method furthermore comprises the steps of decoding the output signal to generate a base band signal; and detecting the watermark in response to a characteristic of the base band signal.

Specifically, the sub-band signal Y(z) may be decoded using a synthesis filter R(z) thereby generating the base band signal having a watermark. This watermark may be detected, for example by using the same detection process as that which would be used for a signal comprising a watermark embedded by the approach described in WO 02/091374 A1.

In the referred embodiment, the apparatus for embedding a watermark may further be operable to add a data payload to the watermark by shifting the set of sub-bands signals relative to the sub-band filter.

In the preferred embodiment, cyclical shifts of all sub-bands are used and each shift position between the input sub-bands X(z) relative to the sub-band filter W(z) corresponds to a specific data value. In this embodiment, the number of available data values corresponds to the number of possible shifts i.e. to the number of sub-bands. The data capacity may thus be found as

$$C= \log_2(M) \qquad (14)$$

The number of possible data values may be increased by allowing more complex shifts than cyclical shifts. The highest number of possible data values where each shift position corresponds to a data value may be achieved by allowing all possible combinations between the sub-bands of X(z) and of the sub-band filter W(z).

The approach will be described with reference to the two sub-band model illustrated in FIG. 11 and 12.

FIG. 11 illustrates a sub-band filter $W_0(z)$ 1101 for embedding a watermark carrying a first bit value in accordance with an embodiment of the invention. As illustrated in FIG. 11, the sub-band filter adds the watermark component $W_A$

(z) to the first sub-band signal $X_0(z)$ and the watermark component $W_B(z)$ to the second sub-band signal $X_1(z)$.

FIG. 12 illustrates a sub-band filter $W_1(z)$ 1201 for embedding a watermark carrying a second bit value in accordance with an embodiment of the invention. In this case, the sub-band filter adds the watermark component $W_B(z)$ to the first sub-band signal $X_0(z)$ and the watermark component $W_A(z)$ to the second sub-band signal $X_1(z)$.

The watermark detector may determine if the watermark decoding has been in accordance with FIG. 11 or FIG. 12 and accordingly determine the corresponding value of the payload data. (The approach corresponds to embedding one of two different watermarks and the watermark detector may comprise independent detection functionality for the first and the second watermark).

Regrettably, the approach of FIG. 12 requires a separate sub-band filter $W_1(z)$ to implement the second data value and this increases the complexity. However, the response of the sub-band filter $W_1(z)$ may be achieved by the sub-band filter $W_0(z)$ by shifting the sub-bands of $X(z)$ relative to the sub-bands of the sub-band filter $W_0(z)$.

If the sub-bands of the input signal $X(z)$ are cyclically shifted by one position before being fed to the sub-band filter $W_0(z)$ 1101 as illustrated in FIG. 13, $W_A(z)$ will be added to the second sub-band signal $X_1(z)$ and the watermark component $W_B(z)$ will be added to the first sub-band signal $X_0(z)$. If the output sub-band signals of the sub-band filter $W_0(z)$ are cyclically shifted in the reverse direction as illustrated in FIG. 13, the media content of the signal is unchanged and may be decoded in a standard decoder. However, the watermark components $W_A(z)$ and $W_B(z)$ have been added to the other sub-bands in comparison to FIG. 11 and thus correspond to the functionality of FIG. 12.

This approach provides exact correspondence as long as the cyclic shift of the sub-band signals is even (i.e. the shift value $s = 0,2,4,6,$). However, it is a property of typical sub-band encoding analysis filters that odd sub-bands have inversed frequency spectra. Therefore, shifting the sub-bands by an odd value will cause a mismatch as the frequency spectra will be inverted for the even sub-bands but not for the odd sub-bands in contrast to the assumptions of the sub-band filter. Accordingly, for odd shift values, the frequency spectra of the individual sub-bands should be inverted before and after the filtering by the sub-band filter $W_0(z)$ 1101. It is well-known to the person skilled in the art that a frequency inversion of a discrete time signal may be achieved by inverting every other sample, i.e. by multiplying the signal by $(-1)^n$ in the time domain. This is illustrated in FIG. 13 by a multiplication 1301 being applied to each sub-band signal before and after the sub-band filtering.

Although the approach has been illustrated for two sub-bands, it may readily be extended to any number of sub-bands.

The invention can be implemented in any suitable form including hardware, software, firmware or any combination of these. However, preferably, the invention is implemented as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is no feasible and/or advantageous. In addition, singular references do not exclude a plurality. Thus references to "a", "an", "first", "second" etc do not preclude a plurality.

**Claims**

1. A method of embedding a watermark into an input signal of an audio signal comprising the steps of:

> obtaining (403) a plurality of sub-band signals of the input signal;
> filtering (405) a set of sub-band signals with a sub-band filter (507) having a response associated with the watermark to generate a set of filtered sub-band signals; and
> generating (407) an output signal by combining the set of filtered sub-band signals.

2. A method as claimed in claim 1 wherein the input signal is a sub-band encoded audio signal.

3. A method as claimed in claim 1 wherein the output signal is a sub-band encoded audio signal.

4. A method as claimed in claim 1 wherein the input signal has a corresponding base band input signal, the output signal has a corresponding base band output signal having an associated desired watermark, and the response of the sub band filter (507) is such that the watermark of the output signal corresponds to the desired watermark of the base band output signal.

5. A method as claimed in claim 1 wherein the response of the sub-band filter (507) corresponds to a sub-band equivalent of a response of base band filter (203) which by filtering of the base band input signal results in the desired watermark.

6. A method as claimed in claim 1 further comprising the step of multiplying at least one of the filtered sub-band signals by a watermark energy scaling factor.

7. A method as claimed in claim 5 further comprising the step of dynamically adapting the watermark energy scaling factor.

8. A method as claimed in claim 6 wherein the step of dynamically adapting the watermark energy scaling factor comprises dynamically adapting the watermark energy scaling factor in response to a characteristic of the input signal.

9. A method as claimed in claim 1 comprising the step of summing an unfiltered sub-band signal and a corresponding filtered sub-band signal.

10. A method as claimed in claim 1 further comprising the step of adding a data payload to the watermark by shifting the set of sub-bands signals relative to the sub-band filter (507).

11. A method as claimed in claim 1 further comprising the step of performing an inverse shifting of the set of filtered sub-bands signals relative to the sub-band filter.

12. A method as claimed in claim 10 wherein each shift position corresponds to a data value.

13. A method as claimed in claim 1 wherein the step of obtaining (403) comprises de-multiplexing, inverse quantising and scaling the input signal.

14. A method as claimed in claim 1 wherein the step of generating (407) comprises quantising and multiplexing the output signal.

15. A method as claimed in claim 1 wherein the set of sub-band signals comprises all sub-band signals of the plurality of sub-band signals.

16. A method as claimed in claim 1 further comprising the steps of:

decoding the output signal to generate a base band signal; and
detecting the watermark in response to a characteristic of the base band signal.

17. A computer program comprising computer program code means, which, when executed, enable the carrying out of a method according to any of the previous claims.

18. A record carrier comprising a computer program as claimed in claim 17.

19. An apparatus for embedding a watermark into an input signal of an audio signal comprising:

means (503, 505) for obtaining a plurality of sub-band signals of the input signal;
a sub-band filter(507) for filtering a set of sub-band signals to generate a set of filtered sub-band signals, the sub-band filter(507) having a response associated with the watermark; and
means (509, 511) for generating an output signal by combining the set of filtered sub-band signals.

**Patentansprüche**

1. Verfahren zum Einbetten eines Wasserzeichens in ein Eingangssignal eines Audiosignals, das die folgenden Schritte umfasst:

Erhalten. (403) einer Vielzahl von Subbandsignalen des Eingangssignals,
Filtern (405) einer Gruppe von Subbandsignalen mit Hilfe eines Subbandfilters (507) mit einem mit dem Wasserzeichen verbundenen Ansprechen, um eine Gruppe von gefilterten Subbandsignalen zu erzeugen, und
Erzeugen (407) eines Ausgangssignals durch Kombinieren der Gruppe gefilterter Subbandsignale.

2. Verfahren nach Anspruch 1, bei dem das Eingangssignal ein in einem Subband codiertes Audiosignal ist.

3. Verfahren nach Anspruch 1, bei dem das Ausgangssignal ein in einem Subband codiertes Audiosignal ist.

4. Verfahren nach Anspruch 1, bei dem das Eingangssignal ein entsprechendes Basisband-Eingangssignal hat, das Ausgangssignal ein entsprechendes Basisband-Ausgangssignal mit einem zugeordneten gewünschten Wasserzeichen hat, und das Ansprechen des Subbandfilters (507) darin besteht, dass das Wasserzeichen des Ausgangssignals dem gewünschten Wasserzeichen des Basisband-Ausgangssignals entspricht.

5. Verfahren nach Anspruch 1, bei dem das Ansprechen des Subbandfilters (507) einem Subband-Äquivalent eines Ansprechens des Basisbandfilters (203) entspricht, das durch Filtern des Basisband-Eingangssignals zu dem gewünschten Wasserzeichen führt.

6. Verfahren nach Anspruch 1, das ferner den Schritt des Multiplizierens mindestens eines der gefilterten Subbandsignale mit einem Wasserzeichen-Energieskalierungsfaktor umfasst.

7. Verfahren nach Anspruch 5, das ferner den Schritt des dynamischen Anpassens des Wasserzeichen-Energieskalierungsfaktors umfasst.

8. Verfahren nach Anspruch 6, bei dem der Schritt des dynamischen Anpassens des Wasserzeichen-Energieskalierungsfaktors das dynamische Anpassen des Wasserzeichen-Energieskalierungsfaktors als Reaktion auf eine Eigenschaft des Eingangssignals umfasst.

9. Verfahren nach Anspruch 1, das den Schritt des Summierens eines ungefilterten Subbandsignals und eines entsprechenden gefilterten Subbandsignals umfasst.

10. Verfahren nach Anspruch 1, das ferner den Schritt des Hinzufügens einer Datennutzlast zu dem Wasserzeichen umfasst, indem die Gruppe von Subbandsignalen im Verhältnis zum Subbandfilter (507) verschoben wird.

11. Verfahren nach Anspruch 1, das ferner den Schritt des Durchführens einer umgekehrten Verschiebung der Gruppe gefilterter Subbandsignale im Verhältnis zum Subbandfilter umfasst.

12. Verfahren nach Anspruch 10, bei dem jede Verschiebungsposition einem Datenwert entspricht.

13. Verfahren nach Anspruch 1, bei dem der Schritt des Erhaltens (403) das Demultiplexen, inverse Quantisieren und Skalieren des Eingangssignals umfasst.

14. Verfahren nach Anspruch 1, bei dem der Schritt des Erzeugens (407) das Quantisieren und Multiplexen des Ausgangssignals umfasst.

15. Verfahren nach Anspruch 1, bei dem die Gruppe von Subbandsignalen alle Subbandsignale der Vielzahl von Subbandsignalen umfasst.

16. Verfahren nach Anspruch 1, das ferner die folgenden Schritte umfasst:

Decodieren des Ausgangssignals, um ein Basisbandsignal zu erzeugen, und
Erkennen des Wasserzeichens als Reaktion auf eine Eigenschaft des Basisbandsignals.

17. Computerprogramm, das Computerprogrammcodemittel umfasst, die, wenn sie ausgeführt werden, die Durchführung eines Verfahrens nach einem der vorhergehenden Ansprüche ermöglichen.

**18.** Aufzeichnungsträger, der ein Computerprogramm nach Anspruch 17 umfasst.

**19.** Gerät zum Einbetten eines Wasserzeichens in ein Eingangssignal eines Audiosignals, das Folgendes umfasst:

Mittel (503, 505) zum Erhalten einer Vielzahl von Subbandsignalen des Eingangssignals,
ein Subbandfilter (507) zum Filtern einer Gruppe von Subbandsignalen, um eine Gruppe gefilterter Subbandsignale zu erzeugen, wobei das Subbandfilter (507) ein mit dem Wasserzeichen verbundenes Ansprechen aufweist, und
Mittel (509, 511) zum Erzeugen eines Ausgangssignals durch Kombinieren der Gruppe gefilterter Subbandsignale.

**Revendications**

**1.** Procédé d'inclusion d'un filigrane dans un signal d'entrée d'un signal audio comprenant les étapes suivantes:

obtention (403) d'une pluralité de signaux de sous-bande du signal d'entrée;
filtrage (405) d'un ensemble de signaux de sous-bande avec un filtre de sous-bande (507) ayant une réponse associée au filigrane pour générer un ensemble de signaux de sous-bande filtrés; et
génération (407) d'un signal de sortie en combinant l'ensemble de signaux de sous-bande filtrés.

**2.** Procédé selon la revendication 1 dans lequel le signal d'entrée est un signal audio codé de sous-bande.

**3.** Procédé selon la revendication 1 dans lequel le signal de sortie est un signal audio codé de sous-bande.

**4.** Procédé selon la revendication 1 dans lequel le signal d'entrée a un signal d'entrée de bande de base correspondant, le signal de sortie a un signal de sortie de bande de base correspondant ayant un filigrane souhaité associé, et la réponse du filtre de sous-bande (507) est telle que le filigrane du signal de sortie correspond au filigrane souhaité du signal de sortie de bande de base.

**5.** Procédé selon la revendication 1 dans lequel la réponse du filtre de sous-bande (507) correspond à un équivalent de sous-bande d'une réponse de filtre de bande de base (203) qui, par filtrage du signal d'entrée de bande de base, amène le filigrane souhaité.

**6.** Procédé selon la revendication 1 comprenant de plus l'étape de multiplication d'au moins un des signaux de sous-bande filtrés par un facteur d'échelle d'énergie de filigrane.

**7.** Procédé selon la revendication 5 comprenant de plus l'étape d'adaptation dynamique du facteur d'échelle d'énergie de filigrane.

**8.** Procédé selon la revendication 6 dans lequel l'étape d'adaptation dynamique du facteur d'échelle d'énergie de filigrane comprend une adaptation dynamique du facteur d'échelle d'énergie de filigrane en réponse à une caractéristique du signal d'entrée.

**9.** Procédé selon la revendication 1 comprenant l'étape de sommation d'un signal de sous-bande non filtré et d'un signal de sous-bande filtré correspondant.

**10.** Procédé selon la revendication 1 comprenant de plus l'étape d'ajout d'une charge de données au filigrane en décalant l'ensemble de signaux de sous-bande par rapport au filtre de sous-bande (507).

**11.** Procédé selon la revendication 1 comprenant de plus l'étape de réalisation d'un décalage inverse de l'ensemble de signaux de sous-bande filtrés par rapport au filtre de sous-bande.

**12.** Procédé selon la revendication 10 dans lequel chaque position de décalage correspond à une valeur de données.

**13.** Procédé selon la revendication 1 dans lequel l'étape d'obtention (403) comprend un démultiplexage, une quantification inverse et une mise à l'échelle du signal d'entrée.

**14.** Procédé selon la revendication 1 dans lequel l'étape de génération (407) comprend une quantification et un multiplexage du signal de sortie.

**15.** Procédé selon la revendication 1 dans lequel l'ensemble de signaux de sous-bande comprend tous les signaux de sous-bande de la pluralité de signaux de sous-bande.

**16.** Procédé selon la revendication 1 comprenant de plus les étapes suivantes:

décodage du signal de sortie pour générer un signal de bande de base; et
détection du filigrane en réponse à une caractéristique du signal de bande de base.

**17.** Programme informatique comprenant un moyen de code de programme informatique, qui, lors de l'exécution, permet la réalisation d'un procédé selon l'une quelconque des revendications précédentes.

**18.** Support d'enregistrement comprenant un programme informatique selon la revendication 17.

**19.** Appareil pour inclure un filigrane dans un signal d'entrée d'un signal audio comprenant:

des moyens (503, 505) pour obtenir une pluralité de signaux de sous-bande du signal d'entrée;
un filtre de sous-bande (507) pour filtrer un ensemble de signaux de sous-bande pour générer un ensemble de signaux de sous-bande filtrés, le filtre de sous-bande (507) ayant une réponse associée au filigrane; et
des moyens (509, 511) pour générer un signal de sortie en combinant l'ensemble de signaux de sous-bande filtrés.

**FIG.1**

EP 1 634 276 B1

FIG.2

FIG.4

FIG.3

$X_0(z)$ $X_1(z)$ $X_{M-1}(z)$ $Y_0(z)$ $Y_1(z)$ $Y_{M-1}(z)$

De Mux $Q^{-1}$ $\overline{W}_{sb}(z)$ $Q$ Mux

501 503 505 507 509 511

bitstream

watermarked bitstream

**FIG.5**

EP 1 634 276 B1

FIG.6

$X_0(z)$

$X_1(z)$

$\overline{R}_{m,p}(z)$

$\uparrow 2$

$z^{-1}$

$X(z)$

$W(z)$

$Y_{bb}(z)$

701

703

## FIG.7

$X_0(z)$

$X_1(z)$

$\overline{W}_{sb}(z)$

$Y_0(z)$

$Y_1(z)$

$\overline{R}_{m,p}(z)$

$\uparrow 2$

$Y_{sb}(z)$

801

701

## FIG.8

**FIG.9**

$X_0(z)$

$X_1(z)$

$\overline{R}_{m,p}(z)$

$\overline{W}_p(z)$

$\overline{Y}_w(z)$

2

$z^{-1}$

$Y_w(z)$

701

901

FIG.10

EP 1 634 276 B1

1101

$$X_0(z) \longrightarrow \boxed{\overline{W}_0(z)} \longrightarrow X_0(z) + W_A(z)$$

$$X_1(z) \longrightarrow \qquad \longrightarrow X_1(z) + W_B(z)$$

**FIG.11**

1201

$$X_0(z) \longrightarrow \boxed{\overline{W}_1(z)} \longrightarrow X_0(z) + W_B(z)$$

$$X_1(z) \longrightarrow \qquad \longrightarrow X_1(z) + W_A(z)$$

**FIG.12**

EP 1 634 276 B1

$X_0(z)$      $(-1)^n$    1301       1101        1301    $(-1)^n$    $X_0(z) + W_B(z)$

$\overline{W}_0(z)$

$X_1(z)$      $(-1)^n$    1301           1301    $(-1)^n$    $X_1(z) + W_A(z)$

**FIG.13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02091374 A

- WO 02091374 A1